# EUROPEAN PATENT APPLICATION

(11) **EP 4 246 959 A1**
(43) Date of publication of application: **20.09.2023**
(21) Application number: 21896519.2
(22) Date of filing: 23.09.2021
(51) Int. Cl.: H04N 5/378, H04N 5/369

(54) **IMAGE SENSOR AND IMAGING APPARATUS**

(30) Priority: 30.11.2020 CN 202011384707
(71) Applicant: Huawei Technologies Co., Ltd., Shenzhen, Guangdong 518129 (CN)
(72) Inventor: DAI, Yufeng, Shenzhen, Guangdong 518129 (CN); CHEN, Kai, Shenzhen, Guangdong 518129 (CN); CHEN, Qiuping, Shenzhen, Guangdong 518129 (CN); WANG, Li, Shenzhen, Guangdong 518129 (CN)
(74) Representative: Gill Jennings & Every LLP
(86) International application number: PCT/CN2021/119962
(87) International publication number: WO 2022/111015

(57) **Abstract**

This application provides an image sensor and an imaging apparatus. The image sensor includes a plurality of pixel units. The plurality of pixel units are divided into a first pixel group (23), a second pixel group (24), a third pixel group (25), and a fourth pixel group (26) that are arranged in an array. The second pixel group (24) and the third pixel group (25) are disposed diagonally. The first pixel group (23) includes first pixel units and a fourth pixel unit. The second pixel group (24) includes second pixel units and a fourth pixel unit. The third pixel group (25) includes second pixel units and a fourth pixel unit. The fourth pixel group (26) includes third pixel units and a fourth pixel unit. The first pixel unit, the second pixel unit, and the third pixel unit are monochrome pixel units that are respectively used to receive lights of different colors. The fourth pixel unit is a white pixel unit that receives a white light. In the foregoing technical solution, a white pixel unit is introduced into each pixel group, and sensitivity of the image sensor is improved by using the white pixel unit. This improves resolution and a signal-to-noise ratio of an image.

## Description

### CROSS-REFERENCE TO RELATED APPLICATIONS

This application claims priority to Chinese Patent Application No. 202011384707.9, filed with the China National Intellectual Property Administration on November 30, 2020 and entitled "IMAGE SENSOR AND IMAGING APPARATUS", which is incorporated herein by reference in its entirety.

### TECHNICAL FIELD

This application relates to the field of imaging technologies, and in particular, to an image sensor and an imaging apparatus.

### BACKGROUND

A conventional pixel array in an image sensor usually uses a cross arrangement of red, green, and blue pixels. With the development of imaging technologies, a brand-new pixel arrangement technology emerges. In this technology, four adjacent pixels of a same color are arranged together to form a pixel with an area four times an area of an original pixel. Therefore, this technology is also referred to as a "Quad Bayer" technology.

In recent years, the "Quad Bayer" technology has been widely used in mobile phone cameras. A pixel with an area four times an area of an original pixel is obtained, so that sensitivity in a low-light shooting environment can be improved, and a signal-to-noise ratio of an image is improved. Finally, a bright and low-noise image is generated.

Currently, an image sensor using a "Quad Bayer" arrangement form is widely used. In a default 10-megapixel output mode, through Quad Bayer processing, four adj acent pixels of a same color are sampled at the same time, to obtain an image with four-fold sensitivity, 1/4 resolution, a single pixel size of 2 um, and 10 megapixels. This implements high sensitivity in a small-sized high-pixel image sensor. In a 40-megapixel full-resolution output mode, a remosaic remosaic algorithm is used to rearrange pixels into a conventional pixel array format. After image signal processing, a 40-megapixel high-resolution full-pixel image is outputted.

However, for a current pixel array with a "Quad Bayer" array arrangement, compared with an image outputted in a conventional pixel array, an image outputted at 1/4 resolution has a significant improvement in signal-to-noise ratio but a significant decrease in resolution; and compared with a result of the conventional pixel array format in which pixels do not need to be staggered, a result outputted at a full pixel has a decrease in resolution.

### SUMMARY

This application provides an image sensor and an imaging apparatus, to improve resolution of the image sensor and improve an imaging effect of the image sensor.

According to a first aspect, an image sensor is provided. The image sensor includes a plurality of pixel units. The plurality of pixel units are divided into a first pixel group, a second pixel group, a third pixel group, and a fourth pixel group that are arranged in an array. The second pixel group and the third pixel group are disposed diagonally. The first pixel group includes first pixel units and a fourth pixel unit. The second pixel group includes second pixel units and a fourth pixel unit. The third pixel group includes second pixel units and a fourth pixel unit. The fourth pixel group includes third pixel units and a fourth pixel unit. The third pixel unit is a monochrome pixel unit that is used to receive lights of different colors. The fourth pixel unit is a white pixel unit that receives a white light. In the foregoing technical solution, a white pixel unit is introduced into each pixel group, and sensitivity of the image sensor is improved by using the white pixel unit. This improves resolution and a signal-to-noise ratio of an image.

In a specific implementable solution, each of the first pixel group, the second pixel group, the third pixel group, and the fourth pixel group includes four pixel units arranged in an array; and among the four pixel units in each pixel group, at least one pixel unit is the white pixel unit, and remaining pixel units are monochrome pixel units that are used to receive lights of a same color. White pixel units of different proportions may be selected in the pixel group.

In a specific implementable solution, each pixel group includes three monochrome pixel units that are used to receive the lights of a same color and one white pixel unit. By using one white unit and three monochrome pixel units, sensitivity of the image sensor is improved and acquired color information is ensured.

In a specific implementable solution, in every two adjacent pixel groups, a white pixel unit located in one pixel group and a white pixel unit located in the other pixel group are spaced apart by another pixel unit.

In a specific implementable solution, each pixel group includes two monochrome pixel units that are used to receive the lights of a same color and two white pixel units, and the two white pixel units are disposed diagonally.

In a specific implementable solution, a size of the fourth pixel unit is smaller than a size of the first pixel unit, a size of the second pixel unit, and a size of the third pixel unit. By reducing a size of the white pixel unit, exposure of a white pixel is reduced, to reduce sensitivity of the white pixel unit, delay saturation of the white pixel unit, make other pixel units more fully exposed, and increase a quantity of image color signals.

In a specific implementable solution, the white pixel unit is wrapped with a metal shield layer, and a size of the white pixel unit wrapped with the metal shield layer is equal to a size of the monochrome pixel unit. The size of the fourth pixel unit is reduced by arranging the metal shield layer

In a specific implementable solution, the image sensor further includes a light filtering module disposed on a light incident side of the plurality of pixel units. The light filtering module filters out noise.

In a specific implementable solution, the image sensor further includes a lens used to converge light, where the lens is located on the light incident side of the plurality of pixel units. The lens that converges light increases a light intake.

In a specific implementable solution, a light filtering module disposed on the light incident side of the plurality of pixel units is further included. Noise interference is reduced, and an imaging effect is improved.

In a specific implementable solution, the light filtering module is a dual-passband light filtering module, and the dual-passband light filtering module is capable of transmitting the white light and infrared light. Noise interference is reduced, and an imaging effect is improved.

In a specific implementable solution, the monochrome pixel unit is coated with a filter layer blocking the infrared light; and the white pixel unit receives the white light and the infrared light. The infrared light is used to increase a luminance value and improve an imaging effect.

In a specific implementable solution, an image processing module is further included, where the image processing module performs an interpolation operation on first-color lights received by the monochrome pixel units in each pixel group to obtain a second-color light corresponding to a pixel unit in a location of the white pixel unit in the pixel group; performs Quad Bayer processing on the four pixel units in each pixel group based on the first-color lights and the second-color light to obtain a Quad-Bayer image; obtains luminance information based on the white light received by the white pixel unit in each pixel group; and combines the Quad-Bayer image formed by each pixel group with the luminance information corresponding to the pixel group to obtain a 1/4-resolution image. A high-quality 1/4-resolution image is obtained.

In a specific implementable solution, the image processing module is further configured to: remosaic a pixel array to obtain an image; perform an interpolation operation on the white light received by each white pixel unit, to obtain luminance information corresponding to each pixel unit; and combine the image obtained through the remosaicing with the luminance information corresponding to each pixel unit, to obtain a full-resolution image. A high-quality full-resolution image is obtained.

According to a second aspect, an imaging apparatus is provided. The imaging apparatus includes a housing and the foregoing image sensor that is disposed in the housing. In the foregoing technical solution, a white pixel unit is introduced into each pixel group, and sensitivity of the image sensor is improved by using the white pixel unit. This improves resolution and a signal-to-noise ratio of an image.

### BRIEF DESCRIPTION OF DRAWINGS

FIG. 1 is a schematic diagram of an application scenario of an image sensor according to an embodiment of this application;
FIG. 2 is a schematic diagram of a pixel array of an image sensor in the conventional technology;
FIG. 3 is a schematic diagram of a structure of an image sensor according to an embodiment of this application;
FIG. 4 is a schematic diagram of a pixel array according to an embodiment of this application;
FIG. 5 is a schematic diagram of illuminating lights onto a pixel array according to an embodiment of this application;
FIG. 6 is a circuit diagram of a color information collection unit according to an embodiment of this application;
FIG. 7 is a circuit diagram of a luminance information collection unit according to an embodiment of this application;
FIG. 8 is a flowchart of forming a high-quality 1/4-resolution image by an image sensor according to an embodiment of this application;
FIG. 9 is a flowchart of forming a high-quality full-resolution image by an image sensor according to an embodiment of this application;
FIG. 10 is a schematic diagram of resolution of a 1/4-resolution image of an image sensor in the conventional technology;
FIG. 11 is a schematic diagram of resolution of a 1/4-resolution image of an image sensor according to an embodiment of this application;
FIG. 12 is a schematic diagram of resolution of a full-resolution image of an image sensor in the conventional technology;
FIG. 13 is a schematic diagram of resolution of a full-resolution image of an image sensor according to an embodiment of this application;
FIG. 14 is a schematic diagram of another pixel array according to an embodiment of this application;
FIG. 15 is a schematic diagram of another pixel array according to an embodiment of this application;
FIG. 16 is a schematic diagram of illuminating lights onto a pixel array according to an embodiment of this application;
FIG. 17 is a receiving curve of the pixel array shown in FIG. 5;
FIG. 18 is a receiving curve of the pixel array shown in FIG. 15;
FIG. 19 is a schematic diagram of improving resolution by using a pixel array according to an embodiment of this application;
FIG. 20 is a schematic diagram of another pixel array according to an embodiment of this application;
FIG. 21 is a diagram of light incidence of another pixel array according to an embodiment of this application;
FIG. 22 is a schematic diagram of a structure of another image sensor according to an embodiment of this application; and
FIG. 23 is a schematic diagram of another pixel array according to an embodiment of this application.

### DESCRIPTION OF EMBODIMENTS

Embodiments of this application are further described below in detail with reference to the accompanying drawings.

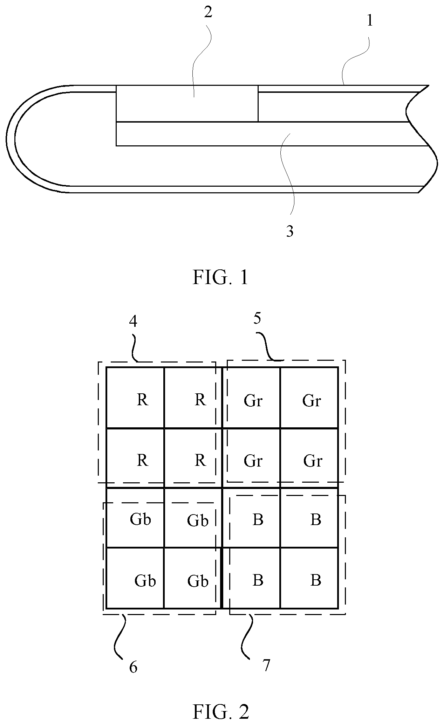

An application scenario of an image sensor provided in embodiments of this application is first described. The image sensor provided in embodiments of this application is used in an electronic device, for example, a common device having a photographing function, for example, a mobile phone, a tablet computer, or a wearable electronic device. Certainly, the method may be applied to another type of electronic device having a photographing function. As shown in FIG. 1, when an image sensor 2 provided in embodiments of this application is used in a mobile terminal, the mobile terminal includes a housing 1 and the image sensor 2 that is disposed in the housing 1. The image sensor 2 is disposed on a mainboard 3 and is electrically connected to the mainboard 3. When a light from a target object is emitted into the image sensor 2, the image sensor 2 may convert an optical signal into an electrical signal, and perform imaging processing.

An image sensor in the conventional technology is shown in FIG. 2. The image sensor includes a plurality of pixel units. The plurality of pixel units are arranged in an array. A 4*4 array is used as an example. The plurality of pixel units are divided into four pixel groups: a first pixel group 4, a second pixel group 5, a third pixel group 6, and a fourth pixel group 7. The first pixel group 4 includes four pixel units used to receive red lights (represented by R in the figure). The second pixel group 5 includes four pixel units used to receive green lights (represented by Gr in the figure). The third pixel group 6 includes four green light (represented by Gb in the figure) pixel units. The fourth pixel group 7 includes four blue light (represented by B in the figure) pixel units. However, when the foregoing technical solution is used, each pixel group in the image sensor in the conventional technology collects only a monochrome light (a red light, a green light, or a blue light) of the target object. As a result, in an environment with low white light illumination, light sensitivity of the image sensor is poor, thereby reducing image quality. Therefore, an embodiment of this application provides an image sensor. The image sensor is described below in detail with reference to specific accompanying drawings and embodiments.

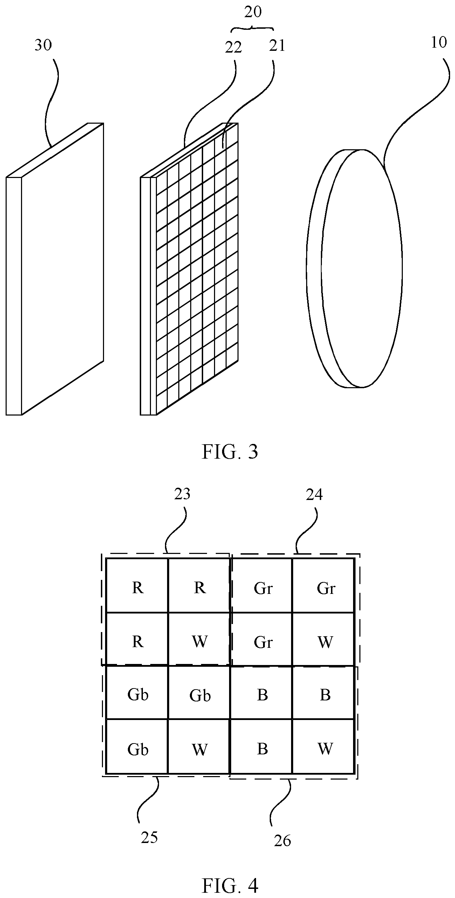

FIG. 3 is a schematic diagram of a structure of an image sensor according to an embodiment of this application. The image sensor provided in this embodiment of this application includes a lens 10, a pixel array 20, and an image processing module 30 that are arranged along an optical path. The pixel array 20 includes a color filter layer 21 and an image collection module 22. After a light irradiated from a target object successively passes through the lens 10 and the color filter layer 21, the light is irradiated to the image collection module 22. The image collection module 22 converts an optical signal into a digital signal. The image processing module 30 performs imaging processing based on the digital signal of the image collection module 22, to form an image.

It should be understood that the lens 10 is an optional module structure. When the image sensor is disposed, the lens 10 may be selectively disposed based on an actual requirement. This is not specifically limited in embodiments of this application.

Refer to FIG. 4 together. The pixel array includes a plurality of pixel units. The plurality of pixel units are arranged in M rows and N columns. Both M and N are positive integers greater than 2. The plurality of pixel units include different types of pixel units. For example, the foregoing pixel units may be classified into a first pixel unit, a second pixel unit, a third pixel unit, and a fourth pixel unit based on types. There are a plurality of first pixel units, a plurality of second pixel units, a plurality of third pixel units, and a plurality of fourth pixel units. Sizes of the first pixel unit, the second pixel unit, the third pixel unit, and the fourth pixel unit are the same.

The first pixel unit, the second pixel unit, and the third pixel unit are monochrome pixel units that can receive lights of different colors, to transmit monochrome lights (a red light, a green light, and a blue light) of the target object. For example, the first pixel unit, the second pixel unit, and the third pixel unit may be a red pixel unit that receives the red light, a green pixel unit that receives the green light, and a blue pixel unit that receives the blue light, respectively. Alternatively, the first pixel unit, the second pixel unit, and the third pixel unit are respectively a cyan pixel unit, a magenta pixel unit, and a yellow pixel unit. Certainly, the foregoing is only two specific examples of the first pixel unit, the second pixel unit, and the third pixel unit. The first pixel unit, the second pixel unit, and the third pixel unit provided in embodiments of this application may receive lights of other colors based on an imaging requirement.

The fourth pixel unit is a white light pixel unit that can receive a white light. When the white light is irradiated on the fourth pixel unit, the white light may be received by the image collection module in the fourth pixel unit.

Still Refer to FIG. 4. A 4*4 array is used as an example. A plurality of pixel units are divided into four pixel groups. The four pixel groups are respectively a first pixel group 23, a second pixel group 24, a third pixel group 25, and a fourth pixel group 26. The four pixel groups are arranged in an array. The first pixel group 23 and the second pixel group 24 are located in a same row. The third pixel group 25 and the fourth pixel group 26 are located in a same row. The third pixel group 25 and the second pixel group 24 are disposed diagonally.

The first pixel group 23 includes three red pixel units and one white pixel unit. In FIG. 4, R is used to represent red lights received by the red pixel units, and W is used to represent a white light received by the white pixel unit. The second pixel group 24 includes three green pixel units and one white pixel unit. In FIG. 4, Gr is used to represent green lights received by the green pixel units in the second pixel group. The third pixel group 25 includes three green pixel units and one white pixel unit. In FIG. 4, Gb is used to represent green lights received by the green pixel units in the third pixel group. The fourth pixel group 26 includes three blue pixel units and one white pixel unit. In FIG. 4, B represents blue lights received by the blue pixel units. It should be understood that Gr and Gb in the foregoing separately represent a green light. To distinguish green lights received by different green pixel units in the second pixel group 24 and the third pixel group 25, Gr and Gb are used to separately represent the green light.

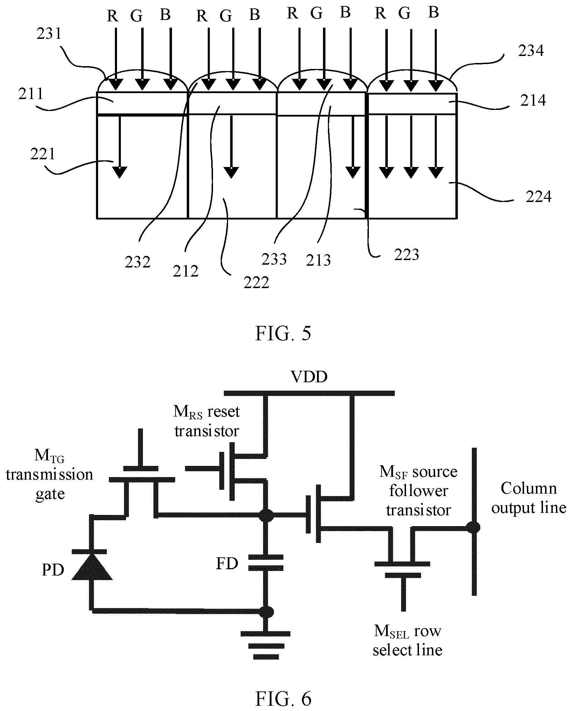

As described above, with reference to FIG. 3, the pixel array 20 includes the color filter layer 21 and the image collection module 22. The pixel array 20 includes first pixel units, second pixel units, third pixel units, and fourth pixel units. Refer to FIG. 5. The first pixel unit includes a first filter area 211 and a first color information collection unit 221. The second pixel unit includes a second filter area 212 and a second color information collection unit 222. The third pixel unit includes a third filter area 213 and a third color information collection unit 223. The fourth pixel unit includes a fourth filter area 214 and a luminance information collection unit 224. It should be noted that the first filter area 211, the second filter area 212, the third filter area 213, and the fourth filter area 214 are all located at the color filter layer 21. The first color information collection unit 221, the second color information collection unit 222, the third color information collection unit 223, and the luminance information collection unit 224 are all located at the image collection module 22.

In an optional solution, the pixel array further includes a microlens group. The first pixel unit may further include a first microlens 231. Lights may be converged to the first filter area 211 by using the first microlens 231. Similarly, the second pixel unit may further include a second microlens 232. The third pixel unit may further include a third microlens 233. The fourth pixel unit may further include a fourth microlens 234.

When receiving different lights, the first pixel unit, the second pixel unit, the third pixel unit, and the fourth pixel unit filter the lights by using filter areas located in corresponding pixel units. For example, when the white light is a light including red, green, and blue, the first filter area 211 of the first pixel unit can transmit only the red light and block lights of other colors. The second filter area 212 of the second pixel unit can transmit only the green light and block lights of other colors. The third filter area 213 of the third pixel unit can transmit only the blue light and block lights of other colors. The fourth filter area 214 of the fourth pixel unit can transmit only the white light (red, green, and blue). Color lights (red, green, and blue lights) related to color information of imaging of the target object are obtained by using the filter areas of the first pixel unit to the third pixel unit, and a white light related to luminance information of imaging of the target object is obtained by using the filter area of the fourth pixel unit. That the sizes of the first pixel unit, the second pixel unit, the third pixel unit, and the fourth pixel unit are the same means that opening sizes of filter areas in all pixel units are the same. In embodiments of this application, a rectangular filter area is used as the filter area of each pixel unit.

After passing through corresponding filter areas, the light is illuminated to the image collection module 22 for further processing (with reference to FIG. 3). The image collection module 22 may obtain an optical signal including a color and luminance of the target object, convert the optical signal into a voltage signal, and then convert the optical signal into a digital signal. With reference to the structure shown in FIG. 5, the first color information collection unit 221 of the first pixel unit receives the red light, the second color information collection unit 222 of the second pixel unit receives the green light, and the third color information collection unit 223 of the third pixel unit receives the blue light. The luminance information collection unit 224 of the fourth pixel unit receives the white light.

FIG. 6 is a circuit diagram of a color information collection unit according to an embodiment of this application. The first color information collection unit, the second color information collection unit, and the third color information collection unit are all conventional four-transistor pixel sensors. Each color information collection unit includes a transmission transistor MTG and a floating diffusion area FD. A control terminal of the transmission transistor MTG receives a control signal. An input terminal of the transmission transistor MTG is connected to a photodiode PD. An output terminal of the transmission transistor MTG outputs a voltage signal when the control terminal of the transmission transistor MTG receives the control signal. The transmission transistor MTG transfers the voltage signal of the photodiode PD to the floating diffusion area FD for storage. Photogenerated carriers accumulated in the photodiode PD are transferred to the floating diffusion area FD, and are converted into the voltage signal. After being converted into digital signal through digital-to-analog conversion ADC, the digital signal is sent to a color information processing unit. A plurality of first pixel units, a plurality of second pixel units, and a plurality of third pixel units are provided, and each pixel unit includes a photodiode PD used to receive an optical signal. Other circuit components shown in FIG. 6 are conventional electronic components in the four-transistor pixel sensors. Details are not described herein again.

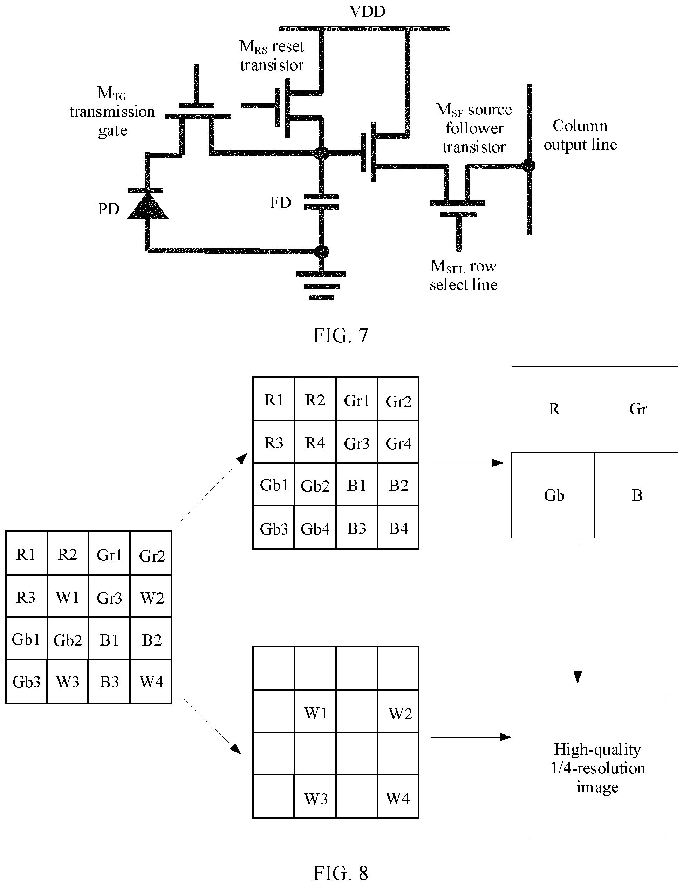

FIG. 7 is a circuit diagram of a luminance information collection unit according to an embodiment of this application. A structure of the luminance information collection unit is the same as that of each color information collection unit. A difference between the two lies only in received lights. Therefore, an acquisition principle of the luminance information collection unit is the same as an acquisition principle of a color information unit. Details are not described herein again. The fourth pixel unit (the white pixel unit) is introduced into the pixel array. Because the white pixel unit allows passage of lights of three different wavelengths, namely, a red light, a green light, and a blue light, luminance of the white pixel unit is higher than luminance of other pixel units that receive a monochrome light (for example, a first pixel unit that receives a red light and a second pixel unit that receives a green light). Therefore, luminance of an image outputted by an image sensor is higher than luminance of an image outputted by an image sensor that uses only a monochrome light to obtain luminance information in the conventional technology.

Refer to FIG. 3. The image processing module 30 includes a color image processing unit, a luminance information processing unit, and a color fusion image unit. The color image processing unit is configured to process the color information acquired by the image collection module 22. The luminance information processing unit is configured to process the luminance information acquired by the image collection module 22. The color fusion image unit is configured to fuse the processed color information and luminance information to obtain a color image.

When the image processing module 30 processes a light received by the pixel array, one image processing method is to form a high-quality 1/4-resolution image, and the other is to form a high-quality full-resolution image. The two methods are described below one by one.

For ease of understanding of a principle of forming an image by the image sensor provided in embodiments of this application, an interpolation operation is first described. The interpolation operation refers to predicting unknown data from known data. Image interpolation refers to predicting a value of a given pixel unit based on information about pixel units around the pixel unit. Common interpolation algorithms can be classified into two types, namely, adaptive interpolation algorithms and non-adaptive interpolation algorithms. In the adaptive algorithms, changes may be made based on content of interpolation (sharp edges or smooth texture). In the non-adaptive algorithms, all pixel units are processed in a same way. The non-adaptive algorithms include nearest neighbor interpolation, bilinear interpolation, bicubic interpolation, spline interpolation, and the like.

As shown in the flowchart shown in FIG. 8, for ease of description, output signals (digital signals) obtained by performing photoelectric conversion on lights received in the pixel units are separately named. Output signals into which red lights received by three first pixel units in the first pixel group are converted are respectively represented by R1, R2, and R3. An output signal into which a white light received by the fourth pixel unit is converted is represented by W1. Output signals into which green lights received by three second pixel units in the second pixel group are respectively represented by Gr1, Gr2, and Gr3. An output signal into which a white light received by the fourth pixel unit is converted is represented by W2. Output signals into which green lights received by three second pixel units in the third pixel group are converted are respectively represented by Gb1, Gb2, and Gb3. An output signal into which a white light received by the fourth pixel unit is converted is represented by W3. Output signals into which blue lights received by three first pixel units in the fourth pixel group are converted are respectively represented by B 1, B2, and B3. An output signal into which a white light received by the fourth pixel unit is converted is represented by W1. The output signals R1, R2, R3, Gr1, Gr2, Gr3, Gb1, Gb2, Gb3, B1, B2, and B3 are color information of the target object. The output signals W1, W2, W3, and W4 are luminance information of the target object.

When a high-quality 1/4-resolution image is formed, with reference to FIG. 3, the pixel array 20 converts a received light into an optical signal. The optical signal enters the image processing module 30 for processing. The image processing module 30 obtains first-color lights received by the monochrome pixel units (the first pixel unit, the second pixel unit, and the third pixel unit) in each pixel group, performs an interpolation operation on the first-color lights received by the monochrome pixel units in each pixel group to obtain, through the interpolation operation, a second-color light corresponding to a pixel unit in a location of the white pixel unit (the fourth pixel unit) in the pixel group; performs Quad Bayer processing on the four pixel units in each pixel group based on the obtained first-color lights and second-color light to obtain a Quad-Bayer image; obtains luminance information based on the white light received by the white pixel unit in each pixel group; and combines the Quad-Bayer image formed by each pixel group with the luminance information corresponding to the pixel group to obtain a 1/4-resolution image.

Specifically, the color image processing unit obtains an original image of the pixel array by using the color information collection units and the luminance information collection unit, and performs an interpolation operation at a pixel unit location corresponding to the fourth pixel unit in the original image, to obtain the color information of a pixel location of the fourth pixel unit. The fourth pixel unit in the first pixel group is used as an example. Color information R4 of a pixel location of the fourth pixel unit may be obtained by performing an interpolation operation on known R2 and R3. R4 = (R2 + R3)/2. Quad Bayer processing is performed on R1, R2, R3, and R4, to obtain an output signal R after the Quad Bayer processing is performed. That is, R = (R1 + R2 + R3 + R4)/4. Similarly, the same operation is performed on the second pixel group, the third pixel group, and the fourth pixel group respectively to obtain Gr = (Gr1 + Gr2 + Gr3 + Gr4)/4, Gb = (Gb1 + Gb2 + Gb3 + Gb4)/4, and B = (B1 + B2 + B3 + B4)/4. In this way, the Quad-Bayer image is obtained.

R, Gr, Gb, and B in the obtained Quad-Bayer image are respectively combined with the four fourth pixel units W1, W2, W3, and W4, to obtain the high-quality 1/4-resolution image.

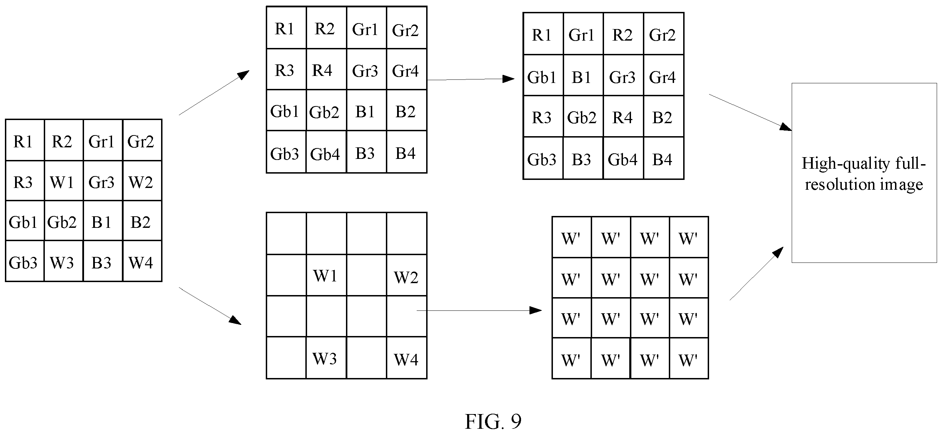

As shown in the flowchart shown in FIG. 9, when a high-quality full-resolution image is formed, the image processing module is further configured to: perform remosaic processing on an output signal (an output signal of each pixel unit) of the pixel array to obtain an image; perform an interpolation operation on the white light received by each white pixel unit, to obtain luminance information corresponding to each pixel unit (including each white pixel unit and each monochrome pixel unit); and combine the image obtained through remosaicing with the luminance information corresponding to each pixel unit to obtain a full-resolution image.

Specifically, the color image processing unit obtains an original image by using the color information collection units and the luminance information collection unit, and performs an interpolation operation on a color pixel corresponding to the location of the fourth pixel unit in the original image, to obtain monochrome information of the pixel location of the fourth pixel unit. The fourth pixel unit in the first pixel group is used as an example. Monochrome information R4 of the pixel location of the fourth pixel unit is obtained by performing an interpolation operation on known R1, R2, and R3. R4 = (R2 + R3)/2. Similarly, Gr = (Gr2 + Gr3)/2, Gb = (Gb2 + Gb3)/2, and B = (B2 + B3)/2. The color image processing unit performs remosaic remosaic processing and demosaic demosaic processing on the original image based on the obtained monochrome information of each pixel unit of the pixel array.

The luminance information processing unit is configured to perform an interpolation operation on the obtained output signals W1, W2, W3, and W4. In the pixel array with the M rows and the N columns, after the output signals W1, W2, W3, and W4 are obtained, the location of the fourth pixel unit and the output signals are substituted into the interpolation operation, to obtain luminance information corresponding to each pixel unit in the M rows and N columns of pixel units.

The image after the demosaic processing is fused with the luminance information to obtain the high-quality full-resolution image.

It can be learned from the foregoing description that, in the pixel array provided in embodiments of this application, the fourth pixel unit (the white pixel unit) is introduced into the pixel array to receive a white light. Because the white pixel unit allows passage of lights of three different wavelengths, namely, a red light, a green light, and a blue light, luminance of the white pixel unit is higher than luminance of other pixel units that receive a monochrome light (for example, a first pixel unit that receives a red light and a second pixel unit that receives a green light). Therefore, luminance of an image outputted by an image sensor is higher than luminance of an image outputted by an image sensor that uses only a monochrome light to obtain luminance information in the conventional technology. This can improve resolution (a capability of capturing image details by the image sensor) and a signal-to-noise ratio (which refers to a ratio of a signal to noise in the image sensor) of the image.

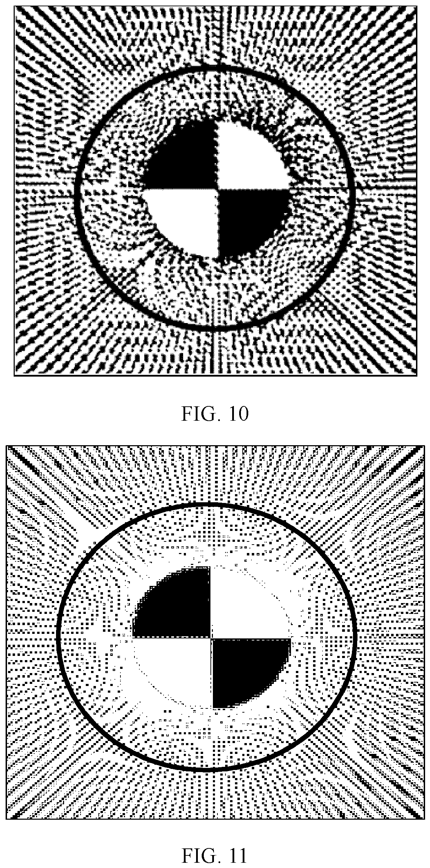

FIG. 10 and FIG. 11 show a comparison between an output effect of a high-quality 1/4-resolution image and resolution of an image sensor in the conventional technology. No texture information exists in the circle in FIG. 10. However, obvious texture information exists in the circle in FIG. 11. Therefore, the image sensor provided in embodiments of the present invention can be significantly improved in terms of resolution.

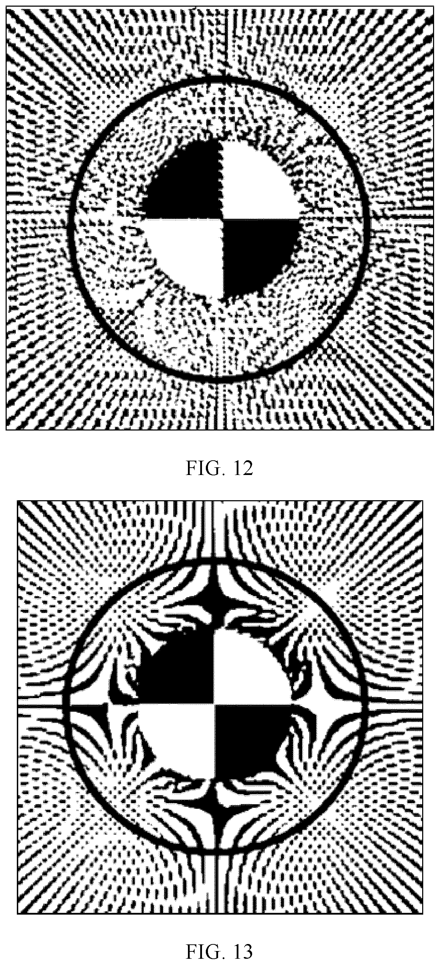

FIG. 12 and FIG. 13 show a comparison between an output effect of a high-quality full-resolution image and resolution of an image sensor in the conventional technology. No texture information exists in the circle in FIG. 12. However, obvious texture information exists in the circle in FIG. 13. Therefore, the image sensor provided in embodiments of the present invention can be significantly improved in terms of resolution. In addition, a signal-to-noise ratio of the image sensor provided in embodiments of this application is 3 dB higher than a signal-to-noise ratio of the image sensor in the conventional technology.

It can be learned from the foregoing description that, compared with the image sensor in the conventional technology, after the fourth pixel unit is introduced, the image sensor provided in embodiments of this application increases a light intake, improves resolution and a signal-to-noise ratio of the image sensor in an output format of a high-quality full-resolution image, and improves resolution in an output format of a high-quality 1/4-resolution image.

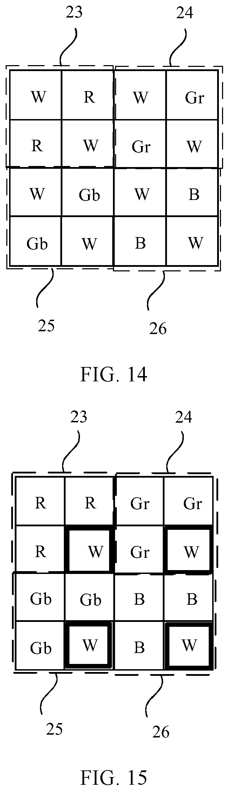

FIG. 14 shows another variant structure based on the pixel array shown in FIG. 4. In the image sensor shown in FIG. 14, a quantity of fourth pixel units introduced in each pixel group is increased. Each of the first pixel group 23, the second pixel group 24, the third pixel group 25, and the fourth pixel group 26 includes two fourth pixel units. In an optional solution, the two fourth pixel units are disposed diagonally.

When more fourth pixel units are introduced, a light intake is increased, resolution and a signal-to-noise ratio of the image sensor in an output format of a high-quality full-resolution image are improved, and resolution and a signal-to-noise ratio of an output format of a high-quality 1/4-resolution image can further be synchronously improved.

It should be understood that FIG. 14 shows only an example of a specific arrangement manner of a pixel array. In embodiments of this application, an arrangement order of pixel units in different pixel groups is not specifically limited. Fourth pixel units in different pixel groups may be adjacent or may not be adjacent.

FIG. 15 shows another variant structure based on the pixel array shown in FIG. 5. An embodiment of this application provides another arrangement manner of a pixel array. In the pixel array shown in FIG. 15, a size of the fourth pixel unit is smaller than a size of the first pixel unit, a size of the second pixel unit, and a size of the third pixel unit.

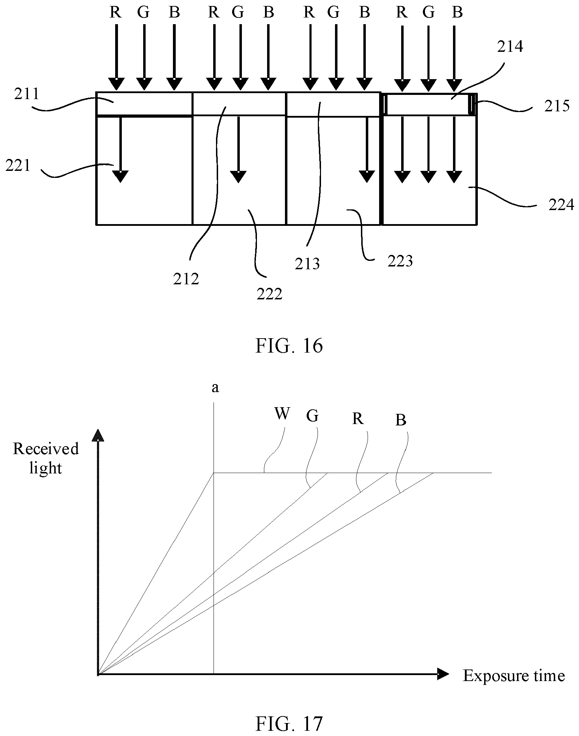

FIG. 16 is a schematic diagram of an arrangement of different types of pixel units. For reference numerals in FIG. 16, refer to same numerals in FIG. 5. The fourth pixel unit is wrapped by a metal shield layer 215. The metal shield layer 215 wraps around the fourth filter area 214 of the fourth pixel unit. A size of the white pixel unit wrapped with the metal shield layer 215 is equal to a size of the monochrome pixel unit (the first pixel unit, the second pixel unit, or the third pixel unit). In FIG. 16, the fourth filter area 214 of the fourth pixel unit is wrapped with the metal shield layer 215. During specific wrapping, only a part of the fourth filter area 214 may be wrapped, or the entire fourth filter area 214 may be wrapped. For example, the metal shield layer 215 has a frame-shaped structure, and the fourth filter area 214 is located in the frame-shaped structure, so that an opening area of the fourth filter area 214 is smaller than opening areas of the first filter area 211, the second filter area 212, and the third filter area 213.

In an optional solution, an opening area of the fourth pixel unit is 0.8 to 0.9 times an opening area of the first pixel unit. For example, the opening area of the fourth pixel unit is 0.8, 0.85, or 0.9 times the opening area of the first pixel unit.

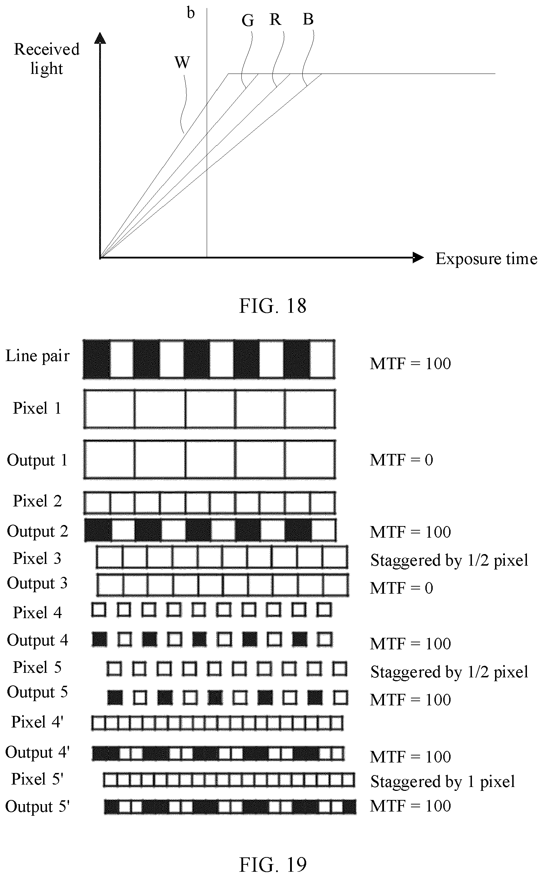

For ease of understanding the impact of the reduction in the size of the fourth pixel unit on another type of pixel unit, descriptions are provided below with reference to FIG. 17 and FIG. 18. FIG. 17 is a schematic diagram of lights received by different pixel units when the first pixel unit, the second pixel unit, the third pixel unit, and the fourth pixel unit have the same size. FIG. 18 is a schematic diagram of lights received by different pixel units when the size of the fourth pixel unit is smaller than the sizes of the first pixel unit, the second pixel unit, and the third pixel unit. W is a white light received by the fourth pixel unit, R is a red light received by the first pixel unit, G is a green light received by the second pixel unit, and B is a blue light received by the fourth pixel unit.

A reference line a in FIG. 17 and a reference line b in FIG. 18 are compared. The reference line a and the reference line b respectively represent the same exposure time. Because the first pixel unit, the second pixel unit, and the third pixel unit receive lights of monochrome colors, and the fourth pixel unit receives a white light (simultaneously receives a red light, a blue light, and a green light), the fourth pixel unit may receive more lights within a same time period, and efficiency of receiving a monochrome light by other pixel units is lower than efficiency of receiving a white light by the fourth pixel unit. It can be learned by comparing FIG. 17 with FIG. 18 that, if the first pixel unit to the fourth pixel unit have equal sizes, when the white light received by the fourth pixel unit tends to be saturated, lights received by other pixel units is low. However, after the size of the fourth pixel unit shown in FIG. 18 is reduced, it is equivalent to that efficiency of receiving a white light by the fourth pixel unit is reduced. Therefore, the other pixel units may obtain more monochrome lights, so that when the white light received by the fourth pixel unit tends to be saturated, the other pixel units may obtain more monochrome light, and lights that represent colors of the target object in the output signal of the pixel array are richer.

After the size of the fourth pixel unit provided in embodiments of this application is reduced, resolution can be further improved. Refer to the schematic diagram shown in FIG. 19, a term "line pair" that is to appear in the following is first explained. "Line pair" (Line pairs) is a special term for film, lens, and other film photography fields. A line pair per millimeter is generally a unit of resolution, which means how many line pairs an instrument can distinguish within one millimeter. When the number of line pairs that can be distinguished is larger, a width of each line that can be distinguished is smaller, and the resolution is higher. A line pair is a factor reflecting image resolution. When the image resolution is higher, more line pairs exist. A pixel 1, a pixel 2, a pixel 3, a pixel 4, and a pixel 5 in FIG. 19 represent pixel units of different sizes.

A sampling test is performed by using a line pair shown in FIG. 19 as a standard. One black line and one white line in a row shown in FIG. 19 form one line pair. Black lines and white lines are alternately arranged to form five line pairs. For example, a width of the pixel 1 is equal to a width of one line pair (the width of the pixel 1 is equal to a width of one black line and one white line). Because the width of the pixel 1 is equal to the width of the line pair, a line pair cannot be displayed at the pixel 1. Therefore, resolution of a sampling result is 0, and the resolution is determined by using an MTF (Modulation Transfer Function, modulation transfer function). A width of the pixel 2 is half the width of one line pair (the width of one black line). In this case, when the pixel 2 is in a one-to-one correspondence with the location of the line pair, resolution of the pixel 2 may reach 100. The pixel 3 is a pixel whose size is the same as that of the pixel 2. However, a location of the pixel 3 and a line pair are staggered by a 1/2 of a pixel width, and resolution of a sampling result of the pixel 3 is 0. For the pixel 4, a size of the pixel 5 is 1/4 of the width of the line pair. Regardless of a sampling location and a sampling interval, both the pixel 4 and the pixel 5 can reach sampling resolution of 100. For example, a pixel 4' and a pixel 5' are obtained by staggering the pixel 4 and the pixel 5 by 1/2 pixel, and sampling resolution of 100 can still be reached. It can be learned from comparison of the pixel 1, the pixel 2, the pixel 3, the pixel 4, and the pixel 5 that when the size (width) of the pixel is smaller, a line pair can be better reflected, and resolution of a corresponding image is higher. Therefore, after the size of the fourth pixel unit becomes smaller, the resolution of the image can be improved.

It can be learned from the foregoing description that, in the pixel array provided in embodiments of this application, because efficiency of receiving a light by the first pixel unit, the second pixel unit, and the third pixel unit is far less than efficiency of receiving a light by the fourth pixel unit, with the same exposure time, an output signal of the fourth pixel unit is always higher than those of the first pixel unit, the second pixel unit, and the third pixel unit. In this case, the luminance of an image is high, and a color is slightly light. Therefore, the size of the fourth pixel unit is smaller than a size of another type of pixel unit, exposure of the fourth pixel unit can be reduced, and saturation of the fourth pixel unit is delayed, so that the first pixel unit, the second pixel unit, and the third pixel unit are more fully exposed, and a quantity of image color signals is increased. In addition, the size of the fourth pixel unit is reduced, and the image resolution can be further improved.

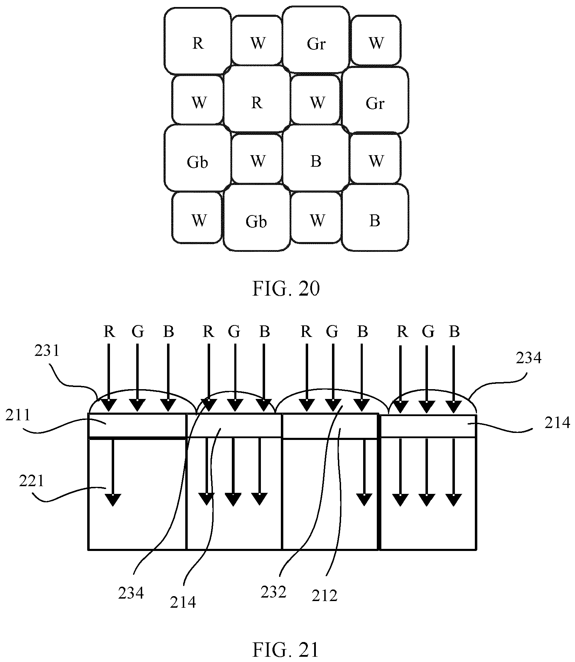

FIG. 20 shows another pixel array according to an embodiment of this application. In the pixel array shown in FIG. 20, sizes of first pixel units, second pixel units, third pixel units, and fourth pixel units are reset based on an idea of reducing the size of the fourth pixel units to improve image resolution. The first pixel group includes two red pixel units and two white pixel units. In FIG. 20, R is used to represent a red light received by the red pixel units, and W is used to represent a white light received by the white pixel unit. The second pixel group includes two green pixel units and two white pixel units. In FIG. 4, Gr is used to represent a green light received by the green pixel units in the second pixel group. The third pixel group includes two green pixel units and two white pixel units. In FIG. 20, Gb is used to represent a green light received by the green pixel units in the third pixel group. The fourth pixel group includes two blue pixel units and two white pixel units. In FIG. 20, B represents a blue light received by the blue pixel units. It should be understood that Gr and Gb in the foregoing separately represent a green light. To distinguish green lights received by different green pixel units in the second pixel group and the third pixel group, Gr and Gb are used to separately represent the green light.

The first pixel unit, the second pixel unit, and the third pixel unit have equal sizes, and the size of the fourth pixel unit is smaller than the size of the first pixel unit. Compared with the fourth pixel unit shown in FIG. 4, the size of the fourth pixel unit shown in FIG. 20 is 0.8 to 0.9 times that of the fourth pixel unit shown in FIG. 4, for example, 0.8 times, 0.85 times, or 0.9 times. The sizes of the first pixel unit, the second pixel unit, and the third pixel unit may be increased to 1 time to 4 times those of the same pixel units shown in FIG. 4, for example, 1 time, 2 times, 3 times, 4 times, or other different sizes.

Continue to refer to FIG. 20. In a row direction and a column direction of the pixel array, two monochrome pixel units are spaced apart by one white pixel unit, to keep monochrome pixel units with increased sizes from affecting light intakes of each other. FIG. 21 is a schematic diagram of light intakes of different pixel units. It can be learned from FIG. 21 that when each of the first pixel unit, the second pixel unit, and the fourth pixel unit includes a microlens, a size of the first microlens 231 is larger than a size of the fourth microlens 234, so that more lights can be converged to the first filter area 211, and lights irradiated to the fourth filter area 214 are reduced. In addition, a size of the second microlens 232 is also larger than the size of the fourth microlens 234, so that more lights can be converged to the second filter area 212, and lights irradiated to the fourth filter area 214 are reduced. The third pixel unit may be disposed in a same manner as the first pixel unit and the second pixel unit. Details are not described herein again.

It can be learned from the foregoing description that, by changing the sizes of the microlenses, efficiency of receiving lights by the first pixel unit, the second pixel unit, and the third pixel unit can be increased, and efficiency of receiving a light by the fourth pixel unit can be reduced, so that the first pixel unit, the second pixel unit, and the third pixel unit are more fully exposed, and a quantity of image color signals is increased. In addition, the size of the fourth pixel unit is reduced, and the image resolution can be further improved. A principle thereof is the same as a principle of the pixel array shown in FIG. 15. Details are not described herein again.

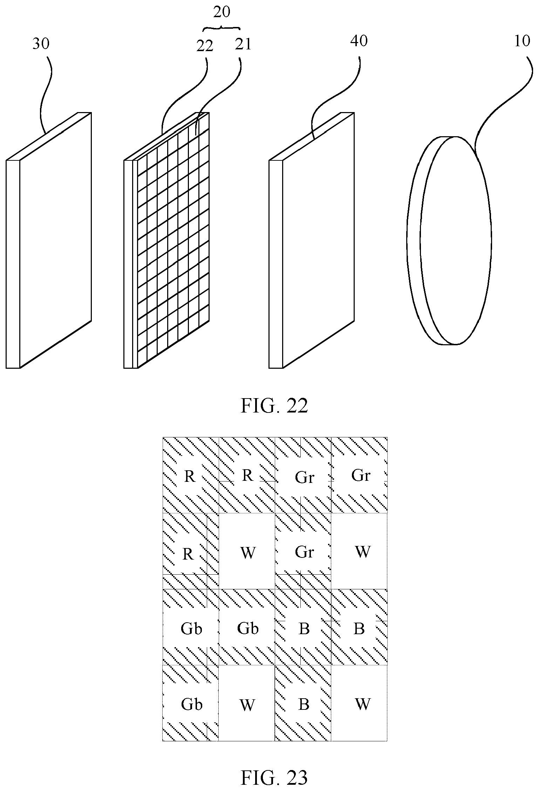

FIG. 22 shows a variant based on the image sensor shown in FIG. 3. A light filtering module 40 is added to the image sensor shown in FIG. 22. After being focused by the lens 10, mixed incident light passes through the light filtering module 40 and then is irradiated to the pixel array 20. The light filtering module 40 is disposed on a light incident side of the pixel array 20, to filter out noise in the mixed incident light of a complex band, and keeps only lights that can pass through the pixel array 20 (that is, lights that are emitted from the target object and that are used for imaging), to improve an imaging effect. For example, if the light required by the pixel array 20 is a light in a white light band and a light in an infrared light band, the light filtering module 40 may be a dual-passband light filtering module. Two passbands that can pass through the dual-passband light filtering module are a white light band and an infrared light band respectively. If the infrared light band corresponding to the pixel array 20 is a specific narrowband infrared light band, the dual-passband light filtering module may correspondingly transmit a light in the specific narrowband infrared light band. After the dual-passband light filtering module is used to transmit a white light and an infrared light and block noise of other frequency bands, impact of the noise on imaging of the image sensor can be reduced, light interference and noise that exist in the operation of subsequent modules can be reduced, and imaging quality of the image sensor can be improved.

Refer to FIG. 23, the monochrome pixel units (the first pixel unit, the second pixel unit, and the third pixel unit) in the pixel array are coated with a filter layer blocking the infrared light, and the white pixel unit (the fourth pixel unit) receives the white light and the infrared light. In FIG. 23, shade is used to represent the filter layer, and the first pixel unit, the second pixel unit, and the third pixel unit are all coated with the filter layer made of the infrared light blocking material. In this way, the first pixel unit, the second pixel unit, and the third pixel unit only sense red, green, and blue components in a white light. This ensures color accuracy. However, the fourth pixel unit senses the white light and the infrared light, so that the infrared light can be used as a luminance channel in extremely low illumination. This greatly improves light sensitivity performance of the image sensor and improves a signal-to-noise ratio of an image.

An embodiment of this application further provides an imaging apparatus. The imaging apparatus is an electronic device, for example, a common device having a photographing function, for example, a mobile phone, a tablet computer, or a wearable electronic device. Certainly, the electronic device may be another type of electronic device with a photographing function. The imaging apparatus includes a housing and any foregoing image sensor that is disposed in the housing. In the foregoing technical solution, a white pixel unit is introduced into each pixel group, and sensitivity of the image sensor is improved by using the white pixel unit. This improves resolution and a signal-to-noise ratio of an image.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An image sensor, comprising a plurality of pixel units, wherein the plurality of pixel units comprise a first pixel group, a second pixel group, a third pixel group, and a fourth pixel group that are arranged in an array, and the second pixel group and the third pixel group are disposed diagonally, wherein
the first pixel group comprises first pixel units and a fourth pixel unit; the second pixel group comprises second pixel units and a fourth pixel unit; the third pixel group comprises second pixel units and a fourth pixel unit; and the fourth pixel group comprises third pixel units and a fourth pixel unit; and
the first pixel unit, the second pixel unit, and the third pixel unit are monochrome pixel units that are respectively used to receive lights of different colors; and the fourth pixel unit is a white pixel unit that receives a white light.

2. The image sensor according to claim 1, wherein each of the first pixel group, the second pixel group, the third pixel group, and the fourth pixel group comprises four pixel units arranged in an array; and
among the four pixel units in each pixel group, at least one pixel unit is the white pixel unit, and remaining pixel units are monochrome pixel units that are used to receive lights of a same color.

3. The image sensor according to claim 2, wherein each pixel group comprises three monochrome pixel units that are used to receive the lights of a same color and one white pixel unit.

4. The image sensor according to claim 3, wherein in every two adjacent pixel groups, a white pixel unit located in one pixel group and a white pixel unit located in the other pixel group are spaced apart by another pixel unit.

5. The image sensor according to claim 2, wherein each pixel group comprises two monochrome pixel units that are used to receive the lights of a same color and two white pixel units, and the two white pixel units are disposed diagonally.

6. The image sensor according to any one of claims 1 to 5, wherein a size of the white pixel unit is smaller than a size of the monochrome pixel unit.

7. The image sensor according to claim 6, wherein the white pixel unit is wrapped with a metal shield layer, and a size of the white pixel unit wrapped with the metal shield layer is equal to the size of the monochrome pixel unit.

8. The image sensor according to any one of claims 1 to 7, further comprising a lens used to converge light, wherein the lens is located on a light incident side of the plurality of pixel units.

9. The image sensor according to any one of claims 1 to 8, further comprising a light filtering module disposed on the light incident side of the plurality of pixel units.

10. The image sensor according to claim 9, wherein the light filtering module is a dual-passband light filtering module, and the dual-passband light filtering module is capable of transmitting the white light and infrared light.

11. The image sensor according to claim 9 or 10, wherein the monochrome pixel unit is coated with a filter layer blocking the infrared light; and the white pixel unit receives the white light and the infrared light.

12. The image sensor according to any one of claims 1 to 11, further comprising an image processing module, wherein the image processing module performs an interpolation operation on first-color lights received by the monochrome pixel units in each pixel group to obtain a second-color light corresponding to a pixel unit in a location of the white pixel unit in the pixel group; performs Quad Bayer processing on the four pixel units in each pixel group based on the first-color lights and the second-color light to obtain a Quad-Bayer image; obtains luminance information based on the white light received by the white pixel unit in each pixel group; and combines the Quad-Bayer image formed by each pixel group with the luminance information corresponding to the pixel group to obtain a 1/4-resolution image.

13. The image sensor according to claim 12, wherein the image processing module is further configured to: remosaic a pixel array to obtain an image;
perform an interpolation operation on the white light received by each white pixel unit, to obtain luminance information corresponding to each pixel unit; and
combine the image obtained through the remosaicing with the luminance information corresponding to each pixel unit, to obtain a full-resolution image.

14. An imaging apparatus, comprising a housing and the image sensor according to any one of claims 1 to 13 that is disposed in the housing.
